# EUROPEAN PATENT APPLICATION

(11) **EP 4 830 982 A1**
(43) Date of publication of application: **28.10.2026**
(21) Application number: 24905327.3
(22) Date of filing: 11.03.2024
(51) Int. Cl.: B60L 53/30, B60L 53/60, B60L 53/16, H02J 7/00

(54) **CHARGING SYSTEM AND DEVICE, AND CHARGING STATION**

(30) Priority: 19.12.2023 CN 202311750476
(71) Applicant: Sungrow Charging Technology Co., Ltd., Hefei, Anhui 230088 (CN)
(72) Inventor: CHEN, Shaoqin, Hefei, Anhui 230088 (CN); XING, Yundong, Hefei, Anhui 230088 (CN); ZHAI, Jiwen, Hefei, Anhui 230088 (CN); XIA, Wei, Hefei, Anhui 230088 (CN); CHEN, Lianping, Hefei, Anhui 230088 (CN)
(74) Representative: Rooney, John-Paul
(86) International application number: PCT/CN2024/080924
(87) International publication number: WO 2025/129821

(57) **Abstract**

A charging system and device, and a charging station. The charging system comprises a plurality of first power modules (10) and a plurality of first switch units (20). Each first power module (10) is provided with an output bus (11), and each first power module (10) is connected, by means of the output bus (11), to a charging gun of a terminal (12) to be powered. The output buses (11) of any two first power modules (10) in a first power group (A) are connected by means of one first switch unit (20); and the output buses (11) of any two first power modules (10) in a second power group (B) are connected by means of another first switch unit (20). The first switch unit (20) connected between every two output buses (11) is different. The plurality of first power modules (10) are ordered sequentially; the first power group (A) comprises the first power modules (10) in odd-numbered positions, and the second power group (B) comprises the first power modules (10) in even-numbered positions. Also provided is a charging system capable of reducing the number of switch units therein.

## Description

This application claims the priority to Chinese Patent Application No. 202311750476.2, titled "CHARGING SYSTEM AND DEVICE, AND CHARGING STATION", filed on December 19, 2023 with the China National Intellectual Property Administration, which is incorporated herein by reference in its entirety.

### FIELD

The present disclosure relates to the technical field of charging piles, and in particular to a charging system, a charging device and a charging station.

### BACKGROUND

With the development of technology in modern society, electric vehicles are increasingly widely used, which makes growing emphasis on the configuration of charging systems for electric vehicles. In multi-gun high-power charging systems in related art, full flexible power distribution is typically achieved by stacking power distribution contactors, resulting in an excessive number of power distribution contactors and excessively high costs.

### SUMMARY

Based on this, a charging system, a charging device and a charging station are provided, to reduce the number of contactors in the charging system.

In a first aspect, a charging system is provided according to the present disclosure. The charging system includes:
multiple first power modules and multiple first switching units.

The multiple first power modules are configured with respective output buses, and are configured to connect to respective charging guns of a power-receiving terminal through the respective output buses.

The multiple first power modules are arranged sequentially, the first power modules with odd sequence numbers are grouped into a first power group, and the first power modules with even sequence numbers are grouped into a second power group.

Output buses of any two first power modules in the first power group are connected to each other through a first switching unit of the multiple first switching units.

Output buses of any two first power modules in the second power group are connected to each other through another first switching unit of the multiple first switching units.

Each pair of interconnected output buses is connected by a dedicated first switching unit.

In an embodiment, the charging system further includes:
multiple second switching units;
at least one second power module, where multiple connection terminals of the second power module are connected to output buses of the respective first power modules in the first power group through respective second switching units, where the respective second switching units connected to the second power module are connected to different output buses; and
at least one third power module, where multiple connection terminals of the third power module are connected to output buses of the respective first power modules in the second power group through respective second switching units, where the respective second switching units connected to the third power module are connected to different output buses.

In an embodiment, the second power module and the third power module have an identical output power.

In an embodiment, each of the at least one second power module is configured with a target output bus with highest power supply priority, and each of the at least one third power module is configured with a target output bus with highest power supply priority, where the target output bus configured for each second power module is different from the target output bus configured for each third power module.

In an embodiment, the multiple first power modules are divided into multiple power pairs based on a predetermined sequence, the number of the first power modules in each of the multiple power pairs is two, and the two first power modules in each of the multiple power pairs have different output powers.

In an embodiment, in each of the multiple power pairs, an output power of the first power module with an even sequence number is greater than an output power of the first power module with an odd sequence number.

In an embodiment, in each of the multiple power pairs, the output power of the first power module with the even sequence number is twice the output power of the first power module with the odd sequence number.

In an embodiment, each of the multiple first power modules includes at least one power unit, and all the power units have an identical output power.

In each of multiple power pairs, the number of the power units in the first power module with an even sequence number is greater than the number of the power units in the first power module with an odd sequence number.

In an embodiment, the multiple first power modules are divided into multiple power pairs based on a predetermined sequence, and output buses of two first power modules in each of the multiple power pairs are configured to connect to two charging guns of a non-liquid-cooled charging terminal, respectively.

In an embodiment, the multiple first power modules are divided into multiple power pairs based on a predetermined sequence, and output buses of two first power modules in each of the multiple power pairs are connected to each other, where a connection node of the two output buses is configured to connect to a charging gun of a liquid-cooled charging terminal.

In an embodiment, the charging system further includes multiple third switching units. The multiple first power modules are divided into multiple power pairs based on a predetermined sequence, and output buses of two first power modules in each of the multiple power pairs are connected to each other through one of the multiple second switching units. The two output buses are connected to a non-liquid-cooled charging gun and a liquid-cooled charging gun of a hybrid charging terminal, respectively.

In an embodiment, the charging system further includes a control device,
the control device is connected to the multiple first switching units, the multiple second switching units and the multiple third switching units, and is configured to control on-off states of the multiple first switching units, on-off states of the multiple second switching units and on-off states of the multiple third switching units.

In an embodiment, the control device is further configured to turn on, when the liquid-cooled charging gun is started first, the second switching unit corresponding to the liquid-cooled charging gun; and
turn off, when the non-liquid-cooled charging gun is started first, the second switching unit corresponding to the non-liquid-cooled charging gun.

In an embodiment, at least one of the first switching unit, the second switching units, or the third switching unit includes a contactor, a circuit breaker, or an isolation switch.

In an embodiment, the output bus includes a copper busbar, an aluminum busbar or a cable.

In a second aspect, a charging device is further provided according to the present disclosure. The charging device includes the charging system according to any of the above embodiments.

In a third aspect, a charging station is further provided according to the present disclosure. The charging station includes the charging system according to any of the above embodiments.

The charging system, the charging device, and the charging station are provided above. The charging system includes multiple first power modules and multiple first switching units. The first switching unit is, for example, a first contactor. The multiple first power modules are arranged sequentially. The multiple first power modules are configured with respective output buses, and are configured to connect to respective charging guns of a power-receiving terminal through the respective output buses. Output buses of any two first power modules with odd sequence numbers are connected to each other through a first switching unit, and output buses of any two first power modules with even sequence numbers are connected to each other through another first switching unit. Thereby, in the charging system, two first power modules with odd sequence numbers can transfer electric energy to each other, and any two first power modules with even sequence numbers can transfer electric energy to each other, thus achieving flexible power distribution of the charging system. In the embodiments of the present disclosure, the first switching unit is arranged between output buses of any two first power modules with odd sequence numbers, and the first switching unit is arranged between output buses of any two first power modules with even sequence numbers, so that the number of the first switching units required for achieving flexible power distribution of the charging system is significantly reduced. Compared with the related art in which full flexible power distribution of the charging system is typically achieved by stacking power distribution switching units, in the charging system according to the embodiments of the present disclosure, the number of switching units arranged in the charging system is reduced, that is, the number of contactors arranged in the charging system is reduced, thereby lowering the cost of the charging system.

### BRIEF DESCRIPTION OF THE DRAWINGS

FIG. 1 is a schematic structural diagram of a charging system according to an embodiment of the present disclosure;
FIG. 2 is a schematic structural diagram of a charging system according to an embodiment of the present disclosure;
FIG. 3 is a schematic structural diagram of a charging system according to an embodiment of the present disclosure;
FIG. 4 is a schematic structural diagram of a charging system according to an embodiment of the present disclosure; and
FIG. 5 is a schematic structural diagram of a charging system according to an embodiment of the present disclosure.

### DETAILED DESCRIPTION

To make the objectives, technical solutions, and advantages of the present disclosure clearer, the present disclosure is further described in detail below in conjunction with the drawings and the embodiments. It should be understood that the embodiments described herein are only for explaining the present disclosure, and are not intended to limit the present disclosure.

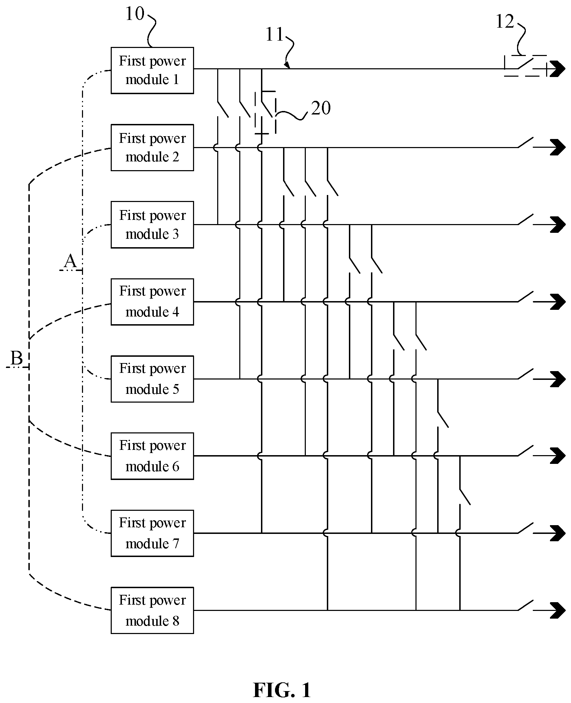

A charging system according to the embodiments of the present disclosure is applicable to charging of electric vehicles. As shown in FIG. 1, a charging system is provided, and the charging system may be arranged in a power cabinet. In an embodiment, the charging system includes multiple first power modules 10 and multiple first switching units 20.

The multiple first power modules 10 are configured with respective output buses 11, and are configured to connect to respective charging guns of a power-receiving terminal 12 through the respective output bus 11. The power-receiving terminal 12 may be, for example, a non-liquid-cooled charging terminal or a liquid-cooled charging terminal of an electric vehicle. The first power module 10 is configured to supply electric energy to the power-receiving terminal for charging. For example, the first power module 10 may supply, through the output bus 11 configured for the first power module 10, electric energy to the power-receiving terminal for charging. The output power of the first power module 10 may be configured based on an actual need. Among the multiple first power modules 10 in the charging system, at least two first power modules 10 have an identical output power or different output powers, depending on actual needs.

The multiple first power modules 10 are arranged sequentially. A first power group A includes the first power modules 10 with odd sequence numbers, and a second power group B includes the first power modules 10 with even sequence numbers. In the embodiments of the present disclosure, the number of the first power modules 10 arranged in the charging system may be odd or even, which is not limited in the embodiments of the present disclosure. The multiple first power modules 10 may be arranged sequentially in the charging system, all first power modules 10 with odd sequence numbers may be grouped into the first power group A, and all first power modules 10 with even sequence numbers may be grouped into the second power group B.

The first switching unit 20 may include a switching component. For example, the first switching unit 20 may be a first contactor. In the first power group A, output buses 11 of any two first power modules 10 are connected to each other through a first switching unit 20. In the second power group B, output buses 11 of any two first power modules 10 are connected to each other through another first switching unit 20, where each pair of interconnected output buses 11 is connected by a dedicated first switching unit 20. In the embodiment of the present disclosure, output buses 11 of any two first power modules 10 in the first power group A are connected to each other through a first switching unit 20, and output buses 11 of any two first power modules 10 in the second power group B are connected to each other through another first switching unit 20. When a first switching unit 20 connected between two output buses 11 is turned on, the two output buses 11 are connected to each other. When the first switching unit 20 connected between the two output buses 11 is turned off, the two output buses 11 are disconnected from each other. Thus, in the charging system, any two first power modules 10 with odd sequence numbers may transfer electric energy to each other by means of an on-off state of the first switching unit 20 connected between the two first power modules 10, and any two first power modules 10 with even sequence numbers may transfer electric energy to each other by means of an on-off state of the first switching unit 20 connected between the two first power modules 10, thereby achieving flexible power distribution of the charging system.

As an example, continuing to refer to FIG. 1, the charging system includes first power modules 10 which are numbered from 1 to 8 and arranged sequentially. The first power group A may include first power modules 10 numbered 1, 3, 5, and 7, and output buses 11 of any two first power modules 10 among the first power modules 10 numbered 1, 3, 5, and 7 are connected to each other through a first switching unit 20. Thus, any two first power modules 10 among the first power modules 10 numbered 1, 3, 5, and 7 may transfer electric energy to each other based on an on-off state of the first switching unit 20 connected between the two first power modules 10. The second power group B includes first power modules 10 numbered 2, 4, 6, and 8, and output buses 11 of any two first power modules 10 among the first power modules 10 numbered 2, 4, 6, and 8 are connected to each other through another first switching unit 20. Thus, any two first power modules 10 among the first power modules 10 numbered 2, 4, 6, and 8 may transfer electric energy to each other based on an on-off state of the first switching unit 20 connected between the two first power modules 10. Thereby, the charging system can achieve flexible power distribution among the various first power modules 10.

In the embodiment of the present disclosure, multiple first power modules 10 and multiple first switching units 20 are arranged in the charging system, where the multiple first power modules 10 are arranged sequentially, each of the multiple first power modules 10 is configured with an output bus 11, output buses 11 of any two first power modules 10 with odd sequence numbers are connected to each other through a first switching unit 20, and output buses 11 of any two first power modules 10 with even sequence numbers are connected to each other through another first switching unit 20. Thus, in the charging system, any two first power modules 10 with odd sequence numbers may transfer electric energy to each other, and any two first power modules 10 with even sequence numbers may transfer electric energy to each other, thereby achieving flexible power distribution of the charging system. In the embodiment of the present disclosure, the first switching unit 20 is arranged between output buses 11 of any two first power modules 10 with odd sequence numbers, and the first switching unit 20 is arranged between output buses 11 of any two first power modules 10 with even sequence numbers, so that the number of the first switching units 20 required for achieving flexible power distribution of the charging system is significantly reduced. Compared with the related art in which full flexible power distribution of the charging system is typically achieved by stacking power distribution switching units, in the charging system according to the embodiment of the present disclosure, the number of switching units arranged in the charging system is reduced, thereby lowering the cost of the charging system.

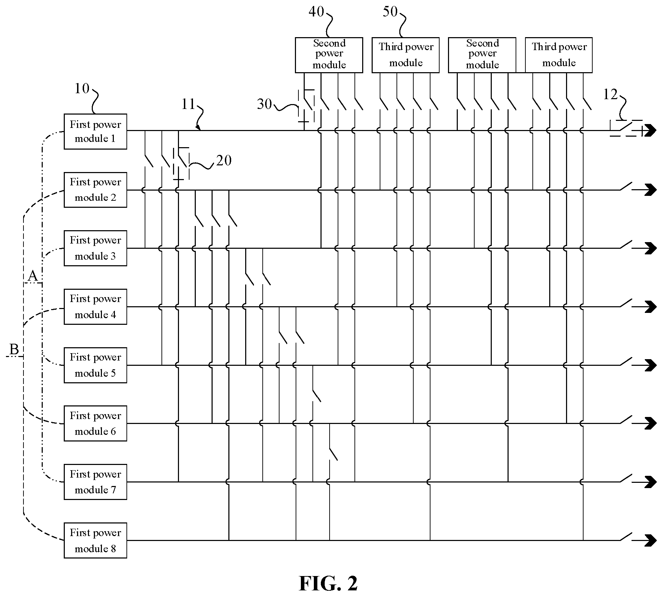

In an embodiment, as shown in FIG. 2, based on the above embodiments, the charging system further includes multiple second switching units 30, at least one second power module 40, and at least one third power module 50.

The second switching unit 30 may include a switching component. For example, the second switching unit 30 may be a second contactor. Multiple connection terminals of the second power module 40 are connected to, through respective second switching units 30, output buses 11 of the respective first power modules 10 in the first power group A, where the respective second switching units 30 connected to the second power module 40 are connected to different output buses 11. Multiple connection terminals of the third power module 50 are connected to, through respective second switching units 30, output buses 11 of respective first power modules 10 in the second power group B, where the respective second switching units 30 connected to the third power module 50 are connected to different output buses 11.

The first power module 10, the second power module 40, and the third power module 50 may have an identical structure, and are capable of supplying electric energy to the power-receiving terminal for charging. Among the first power modules 10, the second power modules 40 and the third power modules 50, at least two power modules may have an identical output power or different output powers, depending on actual needs.

In the embodiment of the present disclosure, the multiple connection terminals of the second power module 40 are connected to output buses 11 of the respective first power modules 10 in the first power group A through the respective second switching units 30, that is, the multiple connection terminals of the second power module 40 are connected to output buses 11 of the first power modules 10 with odd sequence numbers in the charging system through the respective second switching unit 30. Thus, the charging gun connected to any one of the first power modules 10 with odd sequence numbers may draw electric energy from the second power module 40 by means of an on-off state of the second switching unit 30, thereby improving a maximum output power of the charging gun connected to the first power module 10 with an odd sequence number. The multiple connection terminals of the third power module 50 are connected to output buses 11 of the respective first power modules 10 in the second power group B through the respective second switching unit 30, that is, the multiple connection terminals of the third power module 50 are connected to output buses 11 of the first power modules 10 with even sequence numbers in the charging system through the respective second switching units 30. Thus, the charging gun connected to any one of the first power modules 10 with even sequence numbers may draw electric energy from the third power module 50 by means of an on-off state of the second switching unit 30, thereby improving a maximum output power of the charging gun connected to the first power module 10 with an odd sequence number.

As an example, continuing to refer to FIG. 2, the charging system includes first power modules 10 which are numbered from 1 to 8 and sequentially arranged, and the charging system further includes two second power modules 40 and two third power modules 50. The first power modules 10 numbered 1 to 8 include four first power modules 10 with odd sequence numbers. For each of the second power modules 40, the second power module 40 may have four connection terminals, and the four connection terminals of the second power module 40 are connected to the output buses 11 of the four first power modules 10 with odd sequence numbers through respective second switching units 30. Thus, the charging gun connected to any one of the first power modules 10 with odd sequence numbers may draw electric energy from the at least one second power module 40 by means of an on-off state of the second switching unit 30. For example, a charging gun connected to the first power module 10 numbered 1 may simultaneously draw electric energy from two second power modules 40, thereby improving the maximum output power of the charging gun connected to the first power module 10 numbered 1. Similarly, the first power modules 10 numbered 1 to 8 include four first power modules 10 with even sequence numbers. For each of the third power modules 50, the third power module 50 may have four connection terminals, and the four connection terminals of the third power module 50 are connected to the output buses 11 of the four first power modules 10 with even sequence numbers through respective second switching unit 30. Thus, the charging gun connected to any one of the first power modules 10 with even sequence numbers may draw electric energy from the at least one third power module 50 by means of an on-off state of the second switching unit 30. For example, a charging gun connected to the first power module 10 numbered 2 may simultaneously draw electric energy from two third power modules 50, thereby improving a maximum output power of the charging gun connected to the first power module 10 numbered 2.

In the embodiment of the present disclosure, the first power module 10 may be a directly-connected power module which is directly connected to the power-receiving terminal, and the second power module 40 and the third power module 50 may be flexible power modules. Drawing electric energy from the flexible power modules may improve the maximum output power of the charging gun, better achieving full flexible power distribution of the charging system.

In an embodiment, the output power of the second power module 40 is identical to the output power of the third power module 50. As an example, the output power of the second power module 40 and the output power of the third power module 50 are both 30kW.

In this embodiment, the output power of the second power module 40 is identical to the output power of the third power module 50, so that the first power modules 10 with odd sequence numbers and the first power modules 10 with even sequence numbers in the charging system may draw identical electric energy from respective flexible power modules, thereby improving the maximum output power to the same extent, which is conducive to achieving the identical maximum output power.

In an embodiment, each of the second power modules 40 is configured with a target output bus with the highest power supply priority, and each of the third power modules 50 is configured with a target output bus with the highest power supply priority, where the target output bus configured for each second power module 40 is different from the target output bus configured for each third power module 50.

For example, the second power module 40 may preferentially supply power to a target output bus with the highest power supply priority configured for the second power module 40, and the third power module 50 may preferentially supply power to a target output bus with the highest power supply priority configured for the third power module 50. As an example, continuing to refer to FIG. 2, the second power module 40 corresponds to output buses configured for the first power modules 10 numbered 1, 3, 5, and 7. One output bus 11 may be selected from the output buses 11 configured for the first power modules 10 numbered 1, 3, 5, and 7, and the output bus 11 is configured as a target output bus with the highest power supply priority for the second power module 40, so that the second power module 40 preferentially supplies power to the target output bus.

For example, as shown in FIG. 2, each of the second power modules 40 may supply power to the output buses 11 configured for the first power module 10 numbered 1, 3, 5, and 7. In a case that the output bus 11 configured for the first power module 10 numbered 1 is configured as a target output bus with the highest power supply priority for one of the second power modules 40, the second power module 40 may preferentially supply power to the output bus 11 configured for the first power module 10 numbered 1 during a power distribution process. In a case that the output bus 11 configured for the first power module 10 numbered 5 is configured as the target output bus with the highest power supply priority for another of the second power modules 40, the second power module 40 may preferentially supply power to the output bus 11 configured for the first power module 10 numbered 5 during the power distribution process.

Similarly, as shown in FIG. 2, each of the third power modules 50 may supply power to the output buses 11 configured for the first power module 10 numbered 2, 4, 6, and 8. In a case that the output bus 11 configured for the first power module 10 numbered 4 is configured as a target output bus with the highest power supply priority for one of the third power modules 50, the third power module 50 may preferentially supply power to the output bus configured for the first power module 10 numbered 4 during the power distribution process. In a case that the output bus 11 configured for the first power module 10 numbered 8 is configured as the target output bus with the highest power supply priority for another of the third power modules 50, the third power module 50 may preferentially supply power to the output bus 11 configured for the first power module 10 numbered 8 during the power distribution process.

In the embodiment of the present disclosure, each of the second power modules 40 may be configured with a target output bus with the highest power supply priority, and each of the third power modules 50 may be configured with a target output bus with the highest power supply priority, thus preferentially supplying power to respective target output buses with the highest priority respectively, which is conducive to flexibly distributing power from the charging system to the power-receiving terminal on demand.

In an embodiment, the multiple first power modules 10 are divided into multiple power pairs based on a predetermined sequence, the number of the first power modules 10 in each of the multiple of power pairs is two, and the two first power modules 10 in each of the multiple power pairs have different output powers.

As an example, continuing to refer to FIG. 2, the dividing the multiple first power modules 10 into multiple power pairs based on the predetermined sequence includes as follows. The first power modules 10 numbered 1 and 2 are divided into one power pair, the first power modules 10 numbered 3 and 4 are divided into one power pair, the first power modules 10 numbered 5 and 6 are divided into one power pair, and the first power modules 10 numbered 7 and 8 are divided into one power pair. The output power of the first power module 10 numbered 1 is different from the output power of the first power module 10 numbered 2, the output power of the first power module 10 numbered 3 is different from the output power of the first power module 10 numbered 4, the output power of the first power module 10 numbered 5 is different from the output power of the first power module 10 numbered 6, and the output power of the first power module 10 numbered 7 is different from the output power of the first power module 10 numbered 8.

In the embodiment of the present disclosure, the multiple first power modules 10 are divided into multiple power pairs based on a predetermined sequence, the number of the first power modules 10 in each of the multiple of power pairs is two, and the two first power modules 10 in each of the multiple power pairs have different output powers, which is conducive to flexibly distributing power from the charging system to the power-receiving terminal on demand.

In an embodiment, in each of the multiple power pairs, an output power of the first power module with an even sequence number is greater than an output power of the first power module with an odd sequence number.

In an embodiment, each of the multiple first power modules 10 includes at least one power unit, and all the power unit are identical in output power. As an example, the output power of the power unit is 15kW, 20kW, 30kW, or the like. In each of the multiple power pairs, the number of power units in the first power module 10 with an even sequence number is greater than the number of power units in the first power module 10 with an odd sequence number.

In an embodiment, in each of the multiple power pairs, the output power of the first power module 10 with an even sequence number is twice the output power of the first power module 10 with an odd sequence number.

In an embodiment, each of the multiple first power modules 10 includes at least one power unit, and all the power units have an identical output power. For example, the output power of the power unit is 15kW, 20kW, 30kW, or the like. In each of the multiple power pairs, the number of power units in the first power module 10 with an even sequence number is twice the number of power units in the first power module 10 with an odd sequence number.

In an embodiment, each of the second power modules 40 may include a power unit, each of the third power modules 50 may include a power unit. All the power units have an identical output power. For example, the output power of the power unit is 15kW, 20kW, 30kW, or the like.

In the embodiment of the present disclosure, it is ensured that the first power module 10 with a small output power can flexibly supply power to the power-receiving terminal on demand, and the first power module 10 with a large output power can flexibly supply power to the power-receiving terminal on demand.

As an example, continuing to refer to FIG. 2, the first power modules 10 numbered 1 and 2 are divided into one power pair, the first power modules 10 numbered 3 and 4 are divided into one power pair, the first power modules 10 numbered 5 and 6 are divided into one power pair, and the first power modules 10 numbered 7 and 8 are divided into one power pair.

The number of power units in the first power module 10 numbered 2 is twice the number of power units in the first power module 10 numbered 1, the number of power units in the first power module 10 numbered 4 is twice the number of power units in the first power module 10 numbered 3, the number of power units in the first power module 10 numbered 6 is twice the number of power units in the first power module 10 numbered 5, and the number of power units in the first power module 10 numbered 8 is twice the number of power units in the first power module 10 numbered 7.

As an example, in a case that the output power of the power unit is 30kW, the output powers of the first power modules 10 numbered 1, 2, 3, 4, 5, 6, 7, and 8 are 30kW, 60kW, 60kW, 30kW, 30kW, 60kW, 60kW, and 30kW, respectively, the output power of each of the two second power modules 40 is 30kW, and the output power of each of the two third power modules 50 is 30kW. Thus, a maximum output power of each charging gun may reach 240kW by means of drawing electric energy from the two second power modules 40 and the two third power modules 50; and a minimum output power of each charging gun is 60kW when all charging guns are charging simultaneously by means of transferring electric energy between any two of the first power modules 10 with odd sequence numbers and transferring electric energy between any two of the first power modules 10 with even sequence numbers. Moreover, the total number of first switching units 20 and second switching units 30 arranged in the charging system is only 28, that is, the total number of first contactors and second contactors arranged in the charging system is only 28. Compared with the related art in which full flexible power distribution of the charging system is typically achieved by stacking power distribution contactors, in the charging system according to the embodiment of the present disclosure, the number of contactors arranged in the charging system is reduced, thereby lowering the cost of the charging system. Moreover, each charging gun is capable of delivering a relatively large output power, and all charging guns support simultaneously delivering identical output power, ensuring that the charging system can provide a relatively fine granularity of output power, thus achieving flexible power distribution of the charging system.

In the embodiment of the present disclosure, each of the multiple first power modules 10 includes at least one power unit, and all the power units are identical in output power. In each of the multiple power pairs, the number of the power units in the first power module 10 with an even sequence number is greater than the number of the power units in the first power module 10 with an odd sequence number, ensuring that the charging system can provide a relatively fine granularity of output power, thus better achieving flexible power distribution of the charging system, and ensuring that the charging system can meet the power demand of the power-receiving terminal.

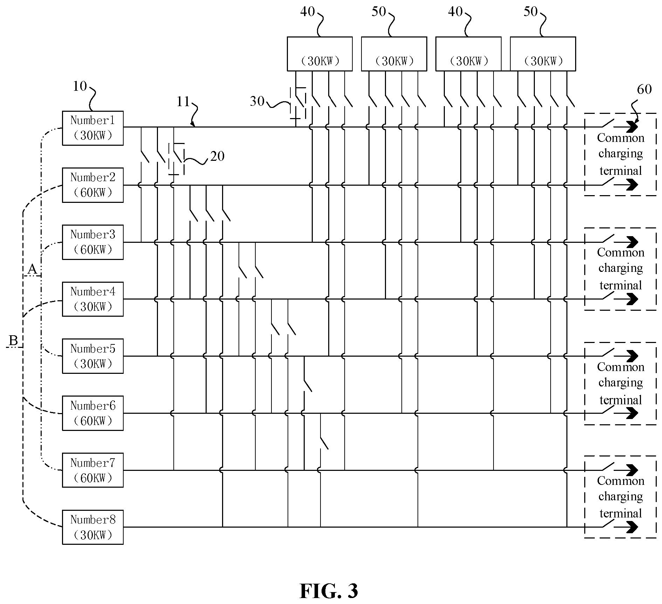

In an embodiment, as shown in FIG. 3, the multiple first power modules 10 are divided into multiple power pairs based on a predetermined sequence, and output buses 11 of the two first power modules 10 in each of the multiple power pairs are configured to connect to two charging guns 60 of a non-liquid-cooled charging terminal, respectively.

In the embodiments of the present disclosure, in some operational scenarios not involving electric vehicles supporting liquid-cooled supercharging, the charging system is only required to be able to supply electric energy to a non-liquid-cooled charging terminal for charging. Therefore, the multiple first power modules 10 may be divided into multiple power pairs based on a predetermined sequence, and the output buses 11 of two first power modules 10 in each of the multiple power pairs are connected to two non-liquid-cooled charging guns 60 of a non-liquid-cooled charging terminal, respectively.

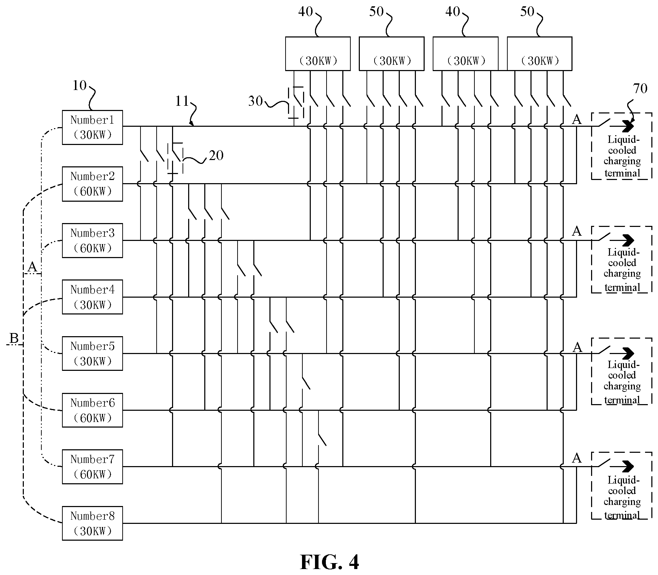

In an embodiment, as shown in FIG. 4, the multiple first power modules 10 are divided into multiple power pairs based on a predetermined sequence, and output buses 11 of two first power modules 10 in each of the multiple power pairs are connected to each other, where a connection node A of the two output buses 11 is configured to connect to a liquid-cooled charging gun 70 of a liquid-cooled charging terminal.

In the embodiments of the present disclosure, in some operational scenarios only involving electric vehicles supporting liquid-cooled supercharging, the charging system is required to be able to supply electric energy to a liquid-cooled charging terminal for charging. Therefore, the multiple first power modules 10 may be divided into multiple power pairs based on a predetermined sequence, output buses 11 of two first power modules 10 in each of the multiple power pairs are connected to each other, and a connection node A of the two output buses 11 is connected to a liquid-cooled charging gun 70 of a liquid-cooled charging terminal, so that the liquid-cooled charging gun 70 can deliver ultra-high output power.

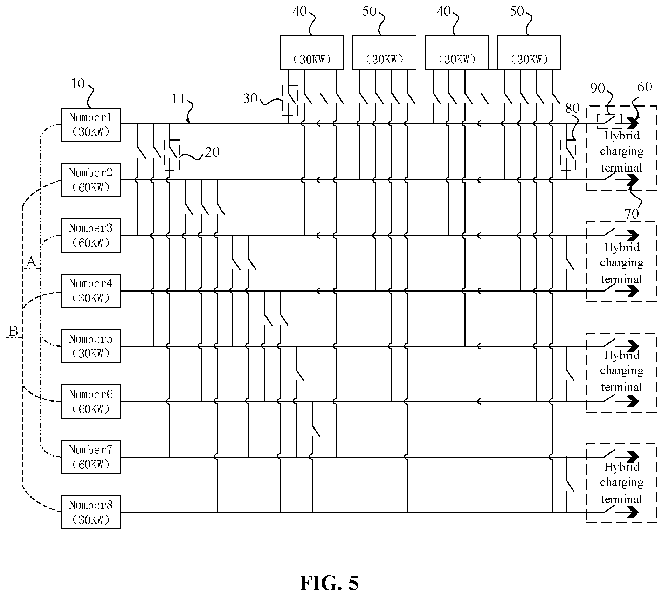

In an embodiment, as shown in FIG. 5, the charging system further includes multiple third switching units 80. The multiple first power modules 10 are divided into multiple power pairs based on a predetermined sequence, and output buses 11 of two first power modules 10 in each of the multiple power pairs are connected to each other through one of the multiple third switching units 80. The two output buses 11 are connected to a non-liquid-cooled charging gun 60 and a liquid-cooled charging gun 70 of a hybrid charging terminal, respectively.

In the embodiment of the present disclosure, in some operational scenarios, only a small number of electric vehicles support liquid-cooled supercharging, a non-liquid-cooled charging gun 60 and a liquid-cooled charging gun 70 may be combined into to form a hybrid charging terminal in order to ensure both high operational efficiency of the charging system and a large number of available charging guns. In this way, the charging system is able to supply electric energy to the non-liquid-cooled charging gun 60 for charging and to supply electric energy to the liquid-cooled charging gun 70 for charging.

In an embodiment, as shown in FIG. 5, the power-receiving terminal includes a fourth switching unit 90 and a charging gun, and an output bus 11 configured for each of the multiple first power modules 10 is connected to the charging gun through a fourth switching unit 90. The fourth switching unit 90 may include a switching component. For example, the fourth switching unit 90 may be a fourth contactor.

In the embodiment of the present disclosure, the first contactor included in the first switching unit 20 and the second contactor included in the second switching unit 30 may be identical in specification. The third contactor included in the third switching unit 80 may be different from the first contactor and the second contactor in specification. The fourth contactor included in the fourth switching unit 90 may be different from the first contactor and the second contactor in specification.

In an embodiment, the charging system further includes a control device. The control device is connected to the multiple first switching units 20, the multiple second switching units 30 and the multiple third switching units 80, and is configured to control on-off states of the multiple first switching units 20, on-off states of the multiple second switching units 30, and on-off states of the multiple third switching units 80. For example, the control device is configured to control, based on the actual charging demand of at least one of the non-liquid-cooled charging gun 60 and the liquid-cooled charging gun 70, the on-off states of the multiple first switching units 20, the on-off states of the multiple second switching units 30, and the on-off states of the multiple third switching units 80.

In an embodiment, the control device is further configured to, when the liquid-cooled charging gun 70 is started first, turn on a third switching unit 80 corresponding to the liquid-cooled charging gun 70. The non-liquid-cooled charging gun 60 is in a waiting state and unable to provide charging service, enabling the liquid-cooled charging gun 70 to deliver high output power. When the non-liquid-cooled charging gun 60 is started first, the control device turns off a third switching unit 80 corresponding to the non-liquid-cooled charging gun 60, enabling the liquid-cooled charging gun 70 to operate at a reduced power, the liquid-cooled charging gun 70 may function as a non-liquid-cooled charging gun 60, and has a maximum output power substantially identical to the output power of the non-liquid-cooled charging gun 60.

In an embodiment, at least one of the first switching unit 20, the second switching units 30 or the third switching unit 80 includes a contactor, a circuit breaker, or an isolation switch.

In an embodiment, the output bus 11 includes a copper busbar, an aluminum busbar, or a cable.

A charging device is further provided according to an embodiment of the present disclosure, and the charging device includes the charging system according to any of the above embodiments. The charging device and the charging system belong to an identical inventive concept and can achieve identical technical effects, and repeated content is not described again here.

A charging station is further provided according to an embodiment of the present disclosure, and the charging station includes the charging system according to any of the above embodiments. The charging station and the charging system belong to the same inventive concept and can achieve identical technical effects, and repeated content is not described again here.

The technical features of the above embodiments can be combined arbitrarily. In order to make the description concise, not all possible combinations of the technical features in the above embodiments are described. However, as long as there is no contradiction in the combination of these technical features, they should be considered as the scope of this specification.

The above embodiments present only some implementations of the present disclosure, which are described in detail but should not be construed as a limitation to a scope of the present disclosure. It should be noted that variations and improvements can be made by those skilled in the art without departing from the idea of the present disclosure. These variations and improvements fall within the protection scope of the present disclosure. Therefore, the protection scope of the present disclosure shall be in accordance with the appended claims.

## Claims

1. A charging system, **characterized by** comprising a plurality of first power modules and a plurality of first switching units, wherein
the plurality of first power modules are configured with respective output buses, and are configured to connect to respective charging guns of a power-receiving terminal through the respective output buses, wherein
the plurality of first power modules are arranged sequentially, the first power modules with odd sequence numbers are grouped into a first power group, and the first power modules with even sequence numbers are grouped into a second power group;
output buses of any two first power modules in the first power group are connected to each other through a first switching unit of the plurality of first switching units;
output buses of any two first power modules in the second power group are connected to each other through another first switching unit of the plurality of first switching units, wherein
each pair of interconnected output buses is connected by a dedicated first switching unit.

2. The charging system according to claim 1, further comprising:
a plurality of second switching units;
at least one second power module, wherein a plurality of connection terminals of the second power module are connected to output buses of the respective first power modules in the first power group through respective second switching units, wherein the respective second switching units connected to the second power module are connected to different output buses; and
at least one third power module, wherein a plurality of connection terminals of the third power module are connected to output buses of the respective first power modules in the second power group through respective second switching units, wherein the respective second switching units connected to the third power module are connected to different output buses.

3. The charging system according to claim 2, wherein the second power module and the third power module have an identical output power.

4. The charging system according to claim 2, wherein each of the at least one second power module is configured with a target output bus with highest power supply priority, and each of the at least one third power module is configured with a target output bus with highest power supply priority, wherein
the target output bus configured for each second power module is different from the target output bus configured for each third power module.

5. The charging system according to claim 1, wherein the plurality of first power modules are divided into a plurality of power pairs based on a predetermined sequence, the number of the first power modules in each of the plurality of power pairs is two, and the two first power modules in each of the plurality of power pairs have different output powers.

6. The charging system according to claim 5, wherein in each of the plurality of power pairs, an output power of the first power module with an even sequence number is greater than an output power of the first power module with an odd sequence number.

7. The charging system according to claim 6, wherein in each of the plurality of power pairs, the output power of the first power module with the even sequence number is twice the output power of the first power module with the odd sequence number.

8. The charging system according to claim 5, wherein each of the plurality of power pairs comprises at least one power unit, and all the power units have an identical output power, wherein
in each of the plurality of power pairs, the number of the power units in the first power module with an even sequence number is greater than the number of the power units in the first power module with an odd sequence number.

9. The charging system according to claim 1, wherein the plurality of first power modules are divided into a plurality of power pairs based on a predetermined sequence, and output buses of two first power modules in each of the plurality of power pairs are configured to connect to two charging guns of a non-liquid-cooled charging terminal, respectively.

10. The charging system according to claim 1, wherein the plurality of first power modules are divided into a plurality of power pairs based on a predetermined sequence, and output buses of two first power modules in each of the plurality power pairs are connected to each other, wherein a connection node of the two output buses is configured to connect to a charging gun of a liquid-cooled charging terminal.

11. The charging system according to claim 1, wherein the charging system further comprises a plurality of third switching units, wherein the plurality of first power modules are divided into a plurality of power pairs based on a predetermined sequence, and output buses of two first power modules in each of the plurality of power pairs are connected to each other through one of the plurality of third switching units, wherein the two output buses are connected to a non-liquid-cooled charging gun and a liquid-cooled charging gun of a hybrid charging terminal, respectively.

12. The charging system according to claim 11, further comprising a control device, wherein
the control device is connected to the plurality of first switching units, the plurality of second switching units and the plurality of third switching units; and
the control device is configured to control on-off states of the plurality of first switching units, on-off states of the plurality of second switching units, and on-off states of the plurality of third switching units.

13. The charging system according to claim 12, wherein the control device is further configured to,
turn on, when the liquid-cooled charging gun is started first, the second switching unit corresponding to the liquid-cooled charging gun; and
turn off, when the non-liquid-cooled charging gun is started first, the second switching unit corresponding to the non-liquid-cooled charging gun.

14. The charging system according to claim 1, wherein at least one of the first switching unit, the second switching unit, or the third switching unit comprises a contactor, a circuit breaker, or an isolation switch.

15. The charging system according to claim 1, wherein the output bus comprises a copper busbar, an aluminum busbar or a cable.

16. A charging device, comprising the charging system according to any one of claims 1 to 15.

17. A charging station, comprising the charging system according to any one of claims 1 to 15.
